# EUROPÄISCHE PATENTSCHRIFT

(11) **EP 2 216 097 B1**
(45) Veröffentlichungstag und Bekanntmachung des Hinweises auf die Patenterteilung: **18.04.2012**
(21) Anmeldenummer: 09152353.0
(22) Anmeldetag: 09.02.2009
(51) Int. Cl.: B02C 13/30, B02C 18/24, H02K 21/24

(54) **Zerkleinerungsmaschine mit einem Scheibenmotor**
Grinding machine with a disc motor
Broyeuse dotée d'un moteur discoïde

(43) Veröffentlichungstag der Anmeldung: 11.08.2010
(73) Patentinhaber: Siemens Aktiengesellschaft, 80333 München (DE)
(72) Erfinder: Schäufele, Stephan, 91052 Erlangen (DE)

(56) Entgegenhaltungen:
- EP-A- 1 749 576
- DE-A1-102007 007 557
- US-A- 6 161 674

## Beschreibung

Die Erfindung betrifft eine Zerkleinerungsmaschine mit einem Zerkleinerungswerk, welches eine mit Zerkleinerungswerkzeugen bestückte Welle aufweist, sowie mit einem Scheibenmotor, mittels welchem die Welle antreibbar ist.

Zu Zerkleinerungsmaschinen zählen im Sinne der Erfindung Maschinen zum Zerstückeln eines zu zerkleinernden Guts, insbesondere von Abfällen. Im Fall von Abfällen ist ein Zerkleinern beispielsweise erwünscht, weil sich Abfälle in zerkleinerter Form leichter wiederverwerten lassen. Beispiele für Zerkleinerungsmaschinen sind Häcksler, Granulatoren, Brecher oder Schneidmühlen.

Das Zerkleinern wird von einer Zerkleinerungsmaschine durch ein Zerkleinerungswerk bewirkt. Darin ist eine Welle angeordnet, die beispielsweise mit Klingen bestückt ist. Indem die Welle mittels einer Antriebseinheit gedreht wird, schneiden diese Klingen das zu zerkleinernde Gut in Stücke. Anstelle von Klingen werden z.B. in Brechern als Zerkleinerungswerkzeuge Zähne eingesetzt, mit denen spröde Materialien zermalmt oder gebrochen werden können. Die Antriebseinheit einer Zerkleinerungsmaschine umfasst bei Zerkleinerungsmaschinen einen Elektromotor.

Eine Antriebseinheit einer Zerkleinerungsmaschine ist immer an den jeweiligen Typ der zugehörigen Zerkleinerungsmaschine (Zerschneiden von Abfällen aus Kunststoff, Brechen von Bitumen, Häckseln von Aluminium etc.) angepasst. Dies betrifft vor allem das Drehmoment, das die Antriebseinheit auf die Welle des Zerkleinerungswerks überträgt, und die Drehzahl, mit der die Welle beim Zerkleinern rotiert. Bei Zerkleinerungsmaschinen, bei denen die Welle des Zerkleinerungswerks abwechselnd in entgegengesetzte Umlaufrichtungen rotieren muss (im reversierenden Betrieb), wird eine möglichst große Beschleunigung der Welle angestrebt, um eine schnelle Verarbeitung des zu zerkleinernden Guts zu ermöglichen.

Beim Zerkleinern wirkt ein Drehmoment auf die Welle, welches sich oft ruckartig und verhältnismäßig stark ändert. Ursache dafür können bei Abfällen beispielsweise harte Gegenstände sein, die eine Bewegung einer Klinge blockieren. Beim Brechen entsteht grundsätzlich eine stoßweise Belastung der Welle. Stoßartiges Belasten oder ruckartiges Blockieren der Welle bedeutet eine hohe mechanische Belastung für die Lagerung der Welle und für die Antriebseinheit der Zerkleinerungsmaschine. Daher verschleißt ein Getriebe einer Antriebseinheit einer Zerkleinerungsmaschine verhältnismäßig schnell, so dass entsprechende Teile des Getriebes besonders leicht auswechselbar sein sollten.

Zerkleinerungsmaschinen sollen außerdem möglichst kostengünstig hergestellt werden.

Die Antriebseinheiten von Zerkleinerungsmaschinen müssen zusätzlich sehr kompakt gebaut sein, um sie räumlich sehr nahe an der Welle des Zerkleinerungswerks unterbringen zu können.

In der Druckschrift DE 10 2005 037 668 B4 und der darauf basierenden Druckschrift EP 1 749 576 A2 ist eine Zerkleinerungsvorrichtung mit Drehstrom-Synchronmotor und einem darin integrierten Getriebe beschrieben. Die Antriebseinheit dieser Zerkleinerungsvorrichtung besteht aus einem hochpoligen Drehstrom-Synchronmotor (Torquemotor), dessen speziell ausgebildete Hohlwelle das Getriebe umschließt. Der Motor sowie die Getriebeeinrichtung sind in einem gemeinsamen Gehäuse angeordnet. Nachteil einer solchen Antriebseinheit ist, dass eine solche Antriebseinheit für einen bestimmten Typ Zerkleinerungsmaschine gebaut werden muss. Abhängig von der benötigten Antriebsleistung der Antriebseinheit muss eine entsprechend große Antriebseinheit bereitgestellt werden. Ein weiterer Nachteil einer solchen Antriebseinheit ist, dass Verschleißteile des Getriebes nur mit einem hohen Montageaufwand ausgewechselt werden können. Zum Auswechseln eines verschlissenen Rades des Getriebes muss nämlich der Motor vollständig von der Zerkleinerungsmaschine abmontiert werden, weil das Getriebe von der Hohlwelle des Motors umschlossen ist.

Indem Dokument DE 10 2007 007557 A1 ist eine Zerkleinerungsmaschine beschrieben, bei der ein Scheibenmotor auf einer Antriebswelle der Zerkleinerungsmaschine angeordnet ist.

Es ist Aufgabe der vorliegenden Erfindung, eine Zerkleinerungsmaschine bereitzustellen, die kompakt gebaut ist und kostengünstig herstellbar und betreibbar ist.

Die Aufgabe wird gelöst durch eine Zerkleinerungsmaschine mit einem Zerkleinerungswerk, welches eine mit Zerkleinerungswerkzeugen bestückte Welle aufweist, und mit einem Scheibenmotor mittels welchem die Welle antreibbar ist, wobei der Scheibenmotor an einem Ende der Welle derart angeordnet ist, dass eine den Antrieb bewirkende Scheibe des Scheibenmotors senkrecht zu einer durch die Welle definierten Achse steht, und wobei der Scheibenmotor mit der Welle über ein Getriebe gekoppelt ist. Unter einer Scheibe des Scheibenmotors ist dabei der vorzugsweise mit Permanentmagneten besetzte Rotor des Scheibenmotors zu verstehen. Diese Scheibe ist bei einer erfindungsgemäßen Zerkleinerungsmaschine derart senkrecht zur Welle des Zerkleinerungswerks ausgerichtet, dass eine Normale zu einer ebenen Oberfläche der Scheibe mit einer durch die Welle definierten Achse zusammenfällt. Dadurch wird bei einer erfindungsgemäßen Zerkleinerungsmaschine ein Scheibenmotor, der sich durch eine flache Bauart auszeichnet, derart an einem Ende einer Welle eines Zerkleinerungswerks angebracht, dass die Abmessung der Zerkleinerungsmaschine in Richtung der durch die Welle definierten Achse nicht bedeutend größer ist als die Länge der Welle selbst. Mit anderen Worten ergibt sich eine kompakte Zerkleinerungsmaschine.

Ein weiterer Vorteil ergibt sich durch den geringen Abstand zwischen dem Scheibenmotor und dem Ende der Welle. Die zum Koppeln des Scheibenmotors an die Welle benötigten Komponenten, insbesondere Wellen des Getriebes, können sehr kurz sein. Dies macht sie sehr steif gegenüber einer Verformung durch Torsionskräfte, die über die Komponenten übertragen werden. Eine solche Zerkleinerungsmaschine ist damit sehr robust gegen eine starke Beanspruchung durch ein sich ruckartig änderndes Drehmoment beim Zerkleinern. Durch einen geringeren Verschleiß und höhere Ausfallsicherheit ist eine solche Zerkleinerungsmaschine wirtschaftlich betreibbar.

Das Getriebe bietet den Vorteil, die Zerkleinerungsmaschine an eine bestimmte Form der Zerkleinerung dadurch anpassen zu können, dass mittels des Getriebes eine optimale Drehzahl der Welle des Zerkleinerungswerks erreicht wird.

Es ist also mit einer erfindungsgemäßen Zerkleinerungsmaschine sehr einfach, sie an verschiedene Formen der Zerkleinerung anzupassen. Es ist somit möglich, in großen Stückzahlen ein einziges Modell einer Zerkleinerungsmaschine mit den Merkmalen der Erfindung herzustellen und eine Zerkleinerungsmaschine eines solchen Modells mit nur geringen baulichen Änderungen an den benötigten Typ von Zerkleinerung anzupassen. Dadurch lassen sich die Herstellungskosten für eine Zerkleinerungsmaschine senken.

In einer bevorzugten Ausführungsform der Erfindung ist ein Gehäuse des Getriebes mit einem Gehäuse des Scheibenmotors verbunden. Dies erlaubt es, eine Einheit aus Getriebe und Scheibenmotor zu bauen, die besonders wenig Platz benötigt. Räder des Getriebes können jedoch für eine Wartung dennoch leicht erreicht werden, weil das Getriebe von außen erreichbar ist, ohne dass der Scheibenmotor abmontiert werden muss.

Bevorzugt ist der Scheibenmotor zwischen dem Zerkleinerungswerk und dem Getriebe angeordnet. Bei dieser Ausführungsform ergibt sich der Vorteil, dass das Getriebe beispielsweise zum Auswechseln von Verschleißteilen für einen Monteur besonders leicht zugänglich ist.

In einer alternativen Ausführungsform liegt die Scheibe des Scheibenmotors radial zur Welle außerhalb des Getriebes. Mit anderen Worten ist das Getriebe beispielsweise in eine Hohlwelle des Scheibenmotors integriert. Dadurch ergibt sich hier der Vorteil, dass die Einheit aus Scheibenmotor und Getriebe nicht mehr Bauraum benötigt als ein Scheibenmotor ohne Getriebe.

Ein weiterer Vorteil ergibt sich, wenn der Scheibenmotor wenigstens eine Einrichtung zum lösbaren Anbringen von Permanentmagneten oder Spulen aufweist. Die Permanentmagneten und Spulen sind diejenigen Elemente, mittels deren durch elektromagnetische Wechselwirkung eine Scheibe des Scheibenmotors mit einem Drehmoment beaufschlagbar ist. Eine Einrichtung zum lösbaren Anbringen dieser Elemente erlaubt es, das von dem Scheibenmotor erzeugbare Drehmoment zu ändern und in optimaler Weise an eine bestimmte Form der Zerkleinerung anzupassen.

Ebenso ergibt sich ein Vorteil, wenn die Zerkleinerungsmaschine wenigstens einen weiteren Scheibenmotor aufweist. Scheibenmotoren können wegen ihrer besonderen Bauweise in einer Kaskade hintereinander auf einer Welle angeordnet werden, so dass ein Vielfaches der Leistung eines einzelnen Scheibenmotors bereitstellbar ist. Es ist auch möglich, jeweils wenigstens einen Scheibenmotor an beiden Enden der Welle anzubringen.

Das Getriebe der Zerkleinerungsmaschine ist vorzugsweise ein Planetengetriebe. Bei einem Planetengetriebe weisen die Räder des Getriebes ein sehr geringes Spiel auf. Dies bedeutet, dass eine ruckartige Änderung eines Drehmoments, mit dem das Getriebe belastet wird, nicht zu einem Hin- und Herschlagen der Räder im Getriebe führt. Dies würde einen verstärkten Verschleiß der Räder bedeuten.

Ein weiterer Vorteil ergibt sich, wenn das Getriebe schaltbar ist. Dadurch ist es besonders leicht, die Drehzahl der Welle eines Zerkleinerungswerks so anzupassen, dass das jeweils zu zerkleinernde Gut optimal bearbeitet wird.

In vergleichbarer Weise ergibt sich ein Vorteil, wenn ein Hohlrad des Getriebes mit der Scheibe des Scheibenmotors verbunden ist. Dies führt zu einer besonders kompakten Bauweise, weil sich neben dem Hohlrad auch die in das Hohlrad greifenden Räder eines Getriebes im Scheibenmotor selbst unterbringen lassen.

Die Erfindung wird im Folgenden anhand von Beispielen näher erläutert. Dazu zeigen:
- FIG 1: eine Darstellung eines Schnitts eines Scheibenmotors mit Getriebe gemäß einer Ausführungsform einer erfin- dungsgemäßen Zerkleinerungsmaschine,
- FIG 2: eine Darstellung eines Schnitts durch einen Scheiben- motor mit Getriebe gemäß einer weiteren Ausführungs- form einer erfindungsgemäßen Zerkleinerungsmaschine.

Die im Folgenden beschriebenen Beispiele stellen bevorzugte Ausführungsformen der Erfindung dar.

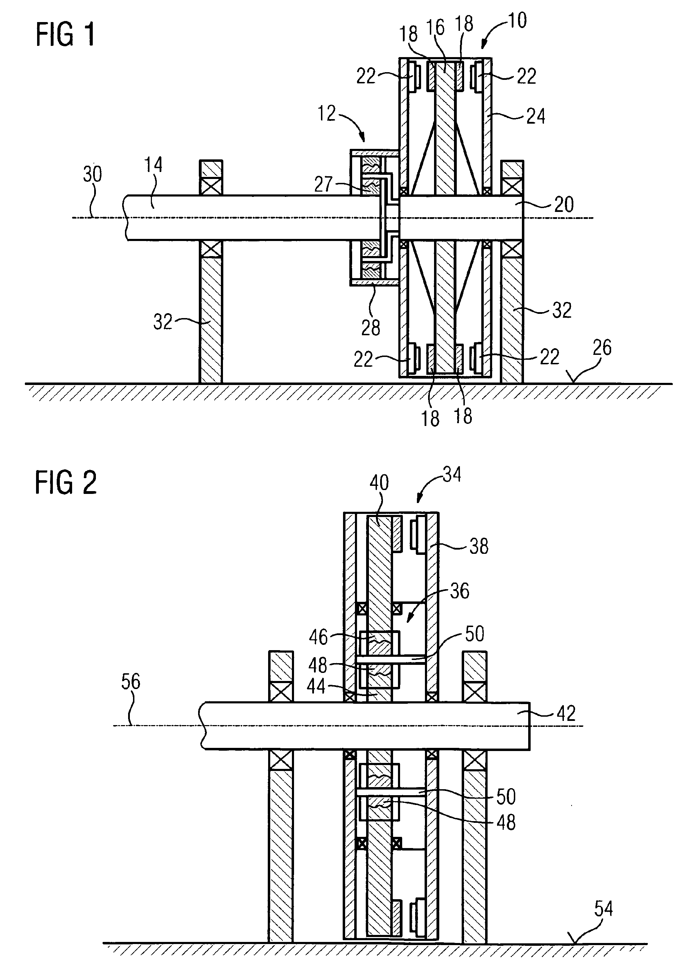

In FIG 1 ist ein Scheibenmotor 10 gezeigt, der über ein Planetengetriebe 12 mit einer Welle 14 eines Zerkleinerungswerks einer Zerkleinerungsmaschine gekoppelt ist. Die Welle 14 erstreckt sich jenseits des dargestellten Bereichs in FIG 1 nach links hin in das Innere des Zerkleinerungswerks. Das Zerkleinerungswerk und übrige Bestandteile der Zerkleinerungsmaschine sind in FIG 1 einer besseren Übersicht halber nicht dargestellt.

In dem Scheibenmotor 10 befindet sich eine Scheibe 16, an der Permanentmagneten 18 angeschraubt sind. Die Scheibe 16 des Scheibenmotors 10 ist fest mit einer Welle 20 des Scheibenmotors verbunden. Die Scheibe 16 kann mithilfe von Spulen 22 in eine rotatorischen Bewegung versetzt werden. Die Spulen 22 sind mit einem Gehäuse 24 des Scheibenmotors 10 verbunden. Das Gehäuse 24 ist fest mit einem Fundament 26 verbunden, auf dem die Zerkleinerungsmaschine steht. In FIG 1 nicht gezeigt ist ein Fuß, über den das Gehäuse 24 mit dem Fundament 26 verbunden ist. Durch Verändern der Lage der Permanentmagneten 18 auf der Scheibe 16 und der Spulen 22 im Gehäuse 24 ist es möglich, ein von dem Scheibenmotor 10 bereitgestelltes und über die Welle 20 abgreifbares Drehmoment zu verändern. Dazu müssen die Permanentmagneten 18 und die Spulen 22 losgeschraubt und in einem veränderten radialen Abstand zur Welle 20 wieder festgeschraubt werden. So kann das von dem Scheibenmotor bereitstellbare Drehmoment an das in die Zerkleinerungsmaschine eingebaute Zerkleinerungswerk angepasst werden.

Das von dem Scheibenmotor 10 bereitgestellte Drehmoment wird über die Welle 20 in das Planetengetriebe 12 eingeleitet. Die Welle 20 treibt dabei Planetenräder des Planetengetriebes 12 an. Ein Sonnenrad 27 des Planetengetriebes 12 ist direkt mittels einer Zahnverbindung auf der Welle 14 des Zerkleinerungswerks befestigt. Ein Gehäuse 28 des Planetengetriebes 12 ist direkt mit dem Gehäuse 24 des Scheibenmotors verbunden. Dadurch ist die Ausdehnung der Zerkleinerungsmaschine entlang einer durch eine Achse 30 der Welle 14 bestimmten Richtung besonders gering. Die geringe Ausdehnung der Zerkleinerungsmaschine entlang der durch die Achse 30 bestimmten Richtung, wird auch dadurch erreicht, dass der Scheibenmotor 10 in der Weise am Ende der Welle 14 angebracht ist, dass die Scheibe 16 des Scheibenmotors 10 senkrecht zur Achse 30 der Welle 14 ausgerichtet ist.

Außerdem bedarf es für eine Lagerung des Gehäuses 12 keiner besonderen Einrichtung, da das Gehäuse 12 von dem Gehäuse 24 des Scheibenmotors 10 getragen wird.

Der Scheibenmotor 10 mit seinem Getriebe 12 ist zwischen zwei Aufhängungen 32 der Zerkleinerungsmaschine montiert. Der Abstand der beiden Aufhängungen 32 ist so groß, dass ein zweiter Scheibenmotor in die Zerkleinerungsmaschine eingebaut werden kann. Dadurch lässt sich die Leistung der Zerkleinerungsmaschine verdoppeln. Um einen zweiten Scheibenmotor einzubauen, wird die Welle 14 des Zerkleinerungswerks durch eine kürzere Welle ersetzt und entsprechend die Welle 20 des Scheibenmotors durch eine längere Welle. Auf eine längere Welle des Scheibenmotors kann dann ein zweiter Scheibenmotor aufgeschoben werden.

Die Zerkleinerungsmaschine der FIG 1 ist ein Modell, das in großen Stückzahlen kostengünstig hergestellt werden kann. Um ein solches Modell an eine bestimmte Form der Zerkleinerung anzupassen, werden das Übersetzungsverhältnis des Planetengetriebes 12, die Zahl der Scheibenmotoren und das von jedem Scheibenmotor bereitstellbare Drehmoment entsprechend angepasst. Das Getriebe kann auch schaltbar sein. Durch Wechseln des Drehzahlverhältnisses mittels des schaltbaren Getriebes ist es auch für einen Benutzer möglich, einen Bereich der Drehzahlen, mit welchen sich die Welle des Zerkleinerungswerks drehen kann, an das zu zerkleinernde Gut anzupassen.

Bei dem in FIG 2 gezeigten Scheibenmotor 34 ist ein Getriebe 36 vollständig in einem Gehäuse 38 des Scheibenmotors 34 integriert. Über das Getriebe 36 ist eine Scheibe 40 des Scheibenmotors 34 mit einer Welle 42 eines in FIG 2 nicht gezeigten Zerkleinerungswerks einer Zerkleinerungsmaschine gekoppelt. Ein Sonnenrad 44 des Planetengetriebes 36 ist dabei direkt mit der Welle 42 verbunden. Ebenso ist ein Hohlrad 46 des Planetengetriebes 36 mit der Scheibe 40 des Scheibenmotors 34 verbunden. Planetenräder 48 des Planetengetriebes 36 werden von axial verlaufenden Stäben 50 gehalten, die mit einem Gehäuse 38 des Scheibenmotors 34 verbunden sind. Das Gehäuse 38 ist in ähnlicher Weise wie bereits im Zusammenhang mit dem Scheibenmotor aus FIG 1 erläutert über einen in FIG 2 nicht gezeigten Fuß mit einem Fundament 54 verbunden.

Der Scheibenmotor 34 befindet sich am Ende der Welle 42. Die Welle erstreckt sich jenseits des gezeigten Ausschnitts nach in FIG 2 links hin ins Innere des Zerkleinerungswerks. Der Scheibenmotor 34 ist derart auf der Welle 42 angebracht, dass eine Achse 56 der Welle 42 senkrecht zur Scheibe 40 des Scheibenmotors 34 steht.

Zusammenfassend ist durch die Beispiele gezeigt, wie es durch die Erfindung ermöglicht wird, eine kompakt gebaute Zerkleinerungsmaschine bereitzustellen, die an verschiedene Formen der Zerkleinerung von Abfällen angepasst werden kann.

## Patentansprüche

1. Zerkleinerungsmaschine mit einem Zerkleinerungswerk, welches eine mit Zerkleinerungswerkzeugen bestückte Welle (14, 42) aufweist, und
mit einem Scheibenmotor (10,34), mittels welchem die Welle (14,42) antreibbar ist,
**dadurch gekennzeichnet, dass** der Scheibenmotor (10,34) an einem Ende der Welle (14,42) derart angeordnet ist, dass eine den Antrieb bewirkende Scheibe (16, 40) des Scheibenmotors (10,34) senkrecht zu einer durch die Welle (14,42) definierten Achse (30, 56) steht, und dass der Scheibenmotor (10,34) mit der Welle (14,42) über ein Getriebe (12,36) gekoppelt ist, wobei ein Rad (27, 44) des Getriebes (12, 36) auf der Welle (14, 42) befestigt ist.

2. Zerkleinerungsmaschine nach Anspruch 1, **dadurch gekennzeichnet, dass** ein Gehäuse (28) des Getriebes mit einem Gehäuse (24) des Scheibenmotors (10) verbunden ist.

3. Zerkleinerungsmaschine nach Anspruch 1 oder 2, **dadurch gekennzeichnet, dass** der Scheibenmotor zwischen dem Zerkleinerungswerk und dem Getriebe angeordnet ist.

4. Zerkleinerungsmaschine nach Anspruch 1, **dadurch gekennzeichnet, dass** die Scheibe (40) des Scheibenmotors (34) radial zur Welle (42) außerhalb des Getriebes (36) liegt.

5. Zerkleinerungsmaschine nach einem der vorhergehenden Ansprüche, **dadurch gekennzeichnet, dass** der Scheibenmotor (10) wenigstens eine Einrichtung zum lösbaren Anbringen von Permanentmagneten (18) oder Spulen (22) aufweist.

6. Zerkleinerungsmaschine nach einem der vorhergehenden Ansprüche, **gekennzeichnet durch** wenigstens einen weiteren Scheibenmotor.

7. Zerkleinerungsmaschine nach einem der vorhergehenden Ansprüche, **dadurch gekennzeichnet, dass** das Getriebe (12, 36) ein Planetengetriebe ist.

8. Zerkleinerungsmaschine nach einem der vorhergehenden Ansprüche, **dadurch gekennzeichnet, dass** das Getriebe schaltbar ist.

9. Zerkleinerungsmaschine nach einem der vorhergehenden Ansprüche, **dadurch gekennzeichnet, dass** ein Hohlrad (46) des Getriebes (36) mit der Scheibe (40) verbunden ist.

## Claims

1. Grinding machine with a grinding mechanism which has a shaft (14, 42) fitted with grinding tools, and
with a disc motor (10, 34), by means of which the shaft (14, 42) can be driven,
**characterised in that** the disc motor (10, 34) is disposed at one end of the shaft (14, 42) such that a disc (16, 40) of the disc motor (10, 34) effecting the drive is perpendicular to an axis (30, 56) defined by the shaft (14, 42), and that the disc motor (10, 34) is coupled to the shaft (14, 42) via a gear unit (12, 36), one wheel (27, 44) of the gear unit (12, 36) being attached to the shaft (14, 42).

2. Grinding machine according to claim 1, **characterised in that** a housing (28) of the gear unit is connected to a housing (24) of the disk motor (10).

3. Grinding machine according to claim 1 or 2, **characterised in that** the disc motor is disposed between the grinding mechanism and the gear unit.

4. Grinding machine according to claim 1, **characterised in that** the disc (40) of the disc motor (34) lies radially to the shaft (42) outside the gear unit (36).

5. Grinding machine according to one of the preceding claims, **characterised in that** the disc motor (10) has at least one device for detachably affixing permanent magnets (18) or coils (22) .

6. Grinding machine according to one of the preceding claims, **characterised by** at least one other disc motor.

7. Grinding machine according to one of the preceding claims, **characterised in that** the gear unit (12, 36) is a planetary gear unit.

8. Grinding machine according to one of the preceding claims, **characterised in that** the gear unit is switchable.

9. Grinding machine according to one of the preceding claims, **characterised in that** a hollow wheel (46) of the gear unit (36) is connected to the disc (40).

## Revendications

1. Broyeuse ayant un groupe de fragmentation qui comporte un arbre ( 14, 42 ) équipé d'outils de fragmentation, et
comprenant un moteur ( 10, 34 ) à disque au moyen duquel l'arbre ( 14, 42 ) peut être entraîné,
**caractérisé en ce que** le moteur ( 10, 34 ) à disque est monté à un bout de l'arbre ( 14, 42 ), **en ce qu'**un disque ( 16, 40 ), provoquant l'entraînement du moteur ( 10, 34 ) à disque est perpendiculaire à un axe ( 30, 56 ) défini par l'arbre ( 14, 42 ) et **en ce que** le moteur ( 10, 34) à disque est accouplé à l'arbre ( 14, 42) par un engrenage ( 12, 36 ), une roue ( 27, 44 ) d'engrenage ( 12, 36 ) étant fixée sur l'arbre ( 14, 42).

2. Broyeuse suivant la revendication 1, **caractérisée en ce qu'**un carter ( 28) d'engrenage est assemblé à un carter ( 24 ) du moteur ( 10 ) à disque.

3. Broyeuse suivant la revendication 1 ou 2, **caractérisée en ce que** le moteur à disque est monté entre le groupe de fragmentation et l'engrenage.

4. Broyeuse suivant la revendication 1, **caractérisée en ce que** le disque ( 40 ) du moteur ( 34 ) à disque se trouve à l'extérieur de l'engrenage ( 36 ) radialement à l'arbre ( 42 ).

5. Broyeuse suivant l'une des revendications précédentes, **caractérisée en ce que** le moteur ( 10 ) à disque a au moins un dispositif pour mettre de manière amovible des aimants ( 18 ) permanents ou des bobines ( 22 ).

6. Broyeuse suivant l'une des revendications précédentes, **caractérisée par** au moins un autre moteur à disque.

7. Broyeuse suivant l'une des revendications précédentes, **caractérisée en ce que** l'engrenage ( 12, 36 ) est un engrenage planétaire.

8. Broyeuse suivant l'une des revendications précédentes, **caractérisée en ce que** l'engrenage est commutable.

9. Broyeuse suivant l'une des revendications précédentes, **caractérisée en ce que** une roue ( 46 ) à denture intérieure de l'engrenage ( 36 ) est assemblée au disque ( 40 ).
